# EUROPÄISCHE PATENTSCHRIFT

(11) **EP 0 691 903 B1**
(45) Veröffentlichungstag und Bekanntmachung des Hinweises auf die Patenterteilung: **30.12.1998**
(21) Anmeldenummer: 95906209.2
(22) Anmeldetag: 27.01.1995
(51) Int. Cl.: B29C 70/50, B29C 47/02

(54) **VERFAHREN ZUR HERSTELLUNG GLASFASERMATTENVERSTÄRKTEN THERMOPLASTPLATTEN UND VORRICHTUNG ZUR DURCHFÜHRUNG DIESES VERFAHRENS**
PROCESS AND DEVICE FOR PRODUCING GLASS FIBRE MAT REINFORCED THERMOPLASTIC BOARDS
PROCEDE ET DISPOSITIF DE PRODUCTION DE PLAQUES THERMOPLASTIQUES RENFORCEES PAR MATS DE FIBRES DE VERRE

(30) Priorität: 28.01.1994 AT 163/94
(43) Veröffentlichungstag der Anmeldung: 17.01.1996
(73) Patentinhaber: ISOSPORT VERBUNDBAUTEILE Ges.m.b.H., A-7000 Eisenstadt (AT)
(72) Erfinder: MIKATS, Günther, A-7024 Hirm (AT); ERHARDT, Günter, A-7061 Trausdorf (AT)
(74) Vertreter: Dungler, Karin
(86) Internationale Anmeldenummer: AT9500016
(87) Internationale Veröffentlichungsnummer: WO9520481

(56) Entgegenhaltungen:
- EP-A- 0 322 774
- EP-A- 0 530 450
- PATENT ABSTRACTS OF JAPAN vol. 007 no. 074 (M-203) ,26.März 1983 & JP,A,58 003832 (TOYO BOSEKI KK) 10.Januar 1983,

## Beschreibung

Die Erfindung betrifft ein Verfahren zur Herstellung von glasfasermattenverstärkten Thermoplastplatten durch Imprägnieren von Glasfasermatten mit einer Thermoplastschmelze und anschließendem Verpressen des Thermoplast-Glasfasermattenverbundes, wobei mindestens eine der Glasfasermatten (10, 11) durch den Düsenspalt (3', 4') einer Imprägnierdüse (3, 4) geführt wird, welche von den Extrudern (1, 2) mit der Thermoplastschmelze (26, 28) gespeist werden.

### Stand der Technik

Es ist bekannt, glasfasermattenverstärkte Thermoplastplatten dadurch herzustellen, daß in einem Extruder eine homogene Thermoplastschmelze gebildet wird, welche über eine Düse zwischen parallel laufenden Glasfasermatten ausgepreßt wird. Anschließend werden unter erhöhtem Druck und erhöhter Temperatur die Glasfasermatten mit der Thermoplastschmelze getränkt und der auf diese Weise gebildete Verbund unter Druck abgekühlt.

Dieses Verfahren hat den Nachteil, daß die Thermoplastschmelze nur an einer Seite der Glasfasermatten aufgebracht wird, sodaß in der Folge, um eine gleichmäßige Durchtränkung der Matte zu gewährleisten, beim Verpressen hohe Drücke bei erhöhten Temperaturen angewendet werden müssen. Zur Erzielung hoher Drücke ist es jedoch notwendig, voluminöse und daher schwer hantierbare Pressen mit hohem Energieverbrauch einzusetzen. Ein Verfahren dieser Art wird beispielsweise in der EP-A-530 450 vorbeschrieben. Aus der EP-A-322 774 ist es jedoch bekannt, mittels speziell angefertigter Extruderdüsen, Thermoplastfolien auch beidseitig an die Glasfasermatten anzubringen. Die Imprägnierung selbst findet in einem nachgeschalteten Kalander unter erhöhter Temperatur statt. Auch dieses Verfahren bringt Energieverluste mit sich, da der endgefertigte Verbund gekühlt werden muß.

### Darstellung der Erfindung

Der Erfindung liegt daher die Aufgabe zugrunde, ein leicht durchführbares, energiesparendes Verfahren zur Herstellung von glasfasermattenverstärkten Thermoplastplatten anzugeben, mit welchem auch eine gleichmäßige Durchtränkung der eingesetzten Glasfasermatte(n) erzielt werden kann.

Erfindungsgemäß wird daher ein Verfahren der eingangs genannten Art vorgeschlagen, welches dadurch gekennzeichnet ist, daß die Imprägnierdüse 3, 4 mit der Thermoplastschmelze über die im Verteilerblock 8, 9 angebrachten Schmelzeschieber 29, 29' regelbar gespeist wird, sodaß jeweils zwei Schmelzeströme (26', 26'' und 28', 28'') gebildet werden, welche am Düsenspaltausgang (27, 27') auf die Ober- und Unterseite der Glasmatten (10, 11) aufgetragen werden, wobei die Vorimprägnierung der Glasfasermatte stattfindet und daß anschließend diese mit Thermoplast vorimprägnierten Glasfasermatten (30, 30') in den Einlaufwalzenspalt (18) der Doppelbandpresse (5) geführt und vorkalibriert werden und anschließend unter Druck mittels der Kühlplatten (22, 22') zu den glasfasermattenverstärkten Thermoplastplatten (25) verpreßt werden.

Vorteilhafterweise werden die Glasfasermatten (10, 11) im Düsenspalt (3', 4') vorgewärmt.

Für die Imprägnierung wird ferner erfindungsgemäß als Thermoplastschmelze (26, 28) eine niedrigviskose Polypropylenschmelze, welche gegebenenfalls Additive wie Peroxide enthält, eingesetzt.

Vorteilhafterweise besteht die Glasfasermatte aus geschnittenen, wirr verlegten und/oder unidirektionalen und/oder direktionalen ungeschnittenen Glasfasern mit einem Flächengehalt von 450 bis 1300 g/m².

Nach einem weiteren Vorteil des erfindinngsgemäßen Verfahrens werden die vorimprägnierten Glasfasermatten 30, 30' im in seinem Querschnitt verstellbaren Einlaufwalzenspalt 18 vorkalibriert. Anschließend wird der gebildete Thermoplast-Glasfasermattenverbund in der Druckzone mit max. 2 bar verpreßt.

Die nach dem erfindungsgemäßen Verfahren hergestellten glasfasermattenverstärkten Thermoplastplatten werden vorteilhafterweise für die Herstellung von Formteilen wie Kraftfahrzeugteilen verwendet, wobei die glasmattenverstärkten Thermoplastplatten auf ihre Schmelzetemperatur aufgeheizt, in eine Preßform eingelegt und unter Druck zum Formteil verpreßt werden.

Die Vorrichtung, welche zur Durchführung des erfindungsgemäßen Verfahrens dient, besteht aus den Extrudern (1, 2), für die Herstellung der Thermoplastschmelze, welche mit den Imprägnierdüsen (3, 4) versehen sind und einer Doppelbandpresse, welche zum Verpressen des Thermoplast-Glasfasermattenverbundes dient, wobei die Extruder (1, 2) mit den Imprägnierdüsen über die Verteilerblöcke (8, 9) in Verbindung stehen, in den Verteilerblöcken (8, 9) für die Regelung der Thermoplastschmelzeströme (26, 26'', 28', 28'') Schmelzeschieber (28, 29) angeordnet sind und die Doppelbandpresse zum Verpressen der glasmattenverstärkten Thermoplastplatten (25) die in der Kühlzone angeordneten Kühlplatten (22, 22') aufweist.

Die erfindungsgemäße Vorrichtung ist ferner dadurch gekennzeichnet, daß die Imprägnierdüsen (3, 4) jeweils zwei Düsenschlitze (31, 31' und 32, 32') aufweisen, wobei zwischen jeweils zwei Düsenschlitzen die Düsenspalte (3', 4') für die Zuführung der Glasfasermatten angeordnet sind.

Die Düsenspalte (3' ,4') sind erfindungsgemäß derart ausgeführt, daß sie zum Düsenspaltausgang (27, 27') hin konisch verlaufend sind, wobei der Düsenspaltquerschnitt beim Düsenspalteingang (3'', 4'') breiter ist als am Düsenspaltausgang (27, 27').

Die Kühlplatten (22, 22') dienen vorteilhafterweise gleichzeitig als Preßplatten, wobei sie einseitig an der Kontaktfläche zu den Stahlbändern (16, 17) mit den Gleitfolien (23, 23') versehen sind.

Ferner weist die Vorrichtung vorteilhafterweise in der Doppelbandpresse (5) Führungsbänder (35, 35') auf, die seitlich endlos mitgeführt werden und in ihrer Dicke dem Vorverbund (36) entsprechen.

Die erfindungsgemäße Vorrichtung ist auch dadurch gekennzeichnet, daß der Querschnitt des Einlaufwalzenspaltes (18), welcher durch die beheizten Einlaufwalzen (12, 13) gebildet wird, einstellbar ist.

### Kurze Beschreibung der Zeichnungen und ein Weg zur Ausführung der Erfindung

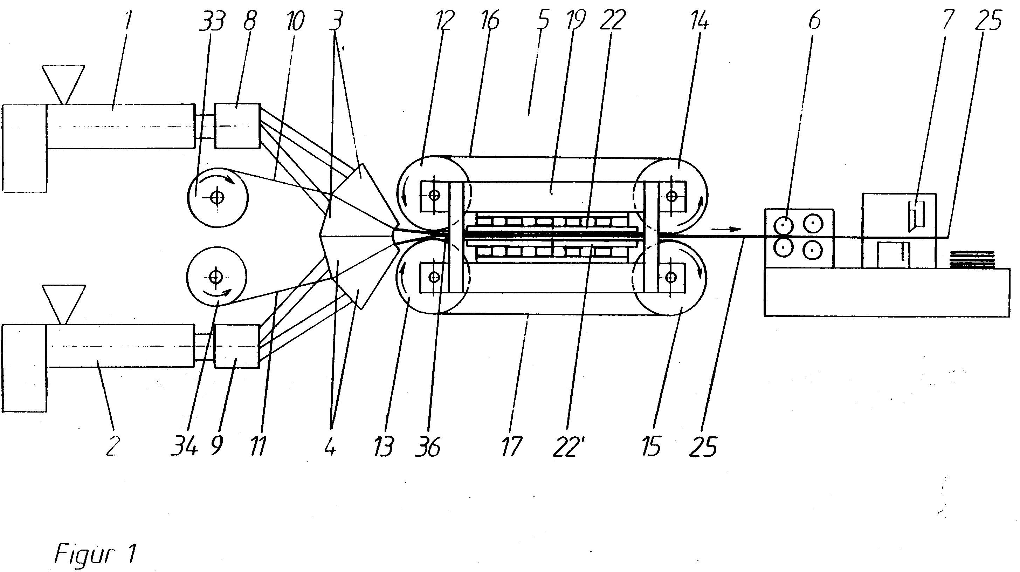

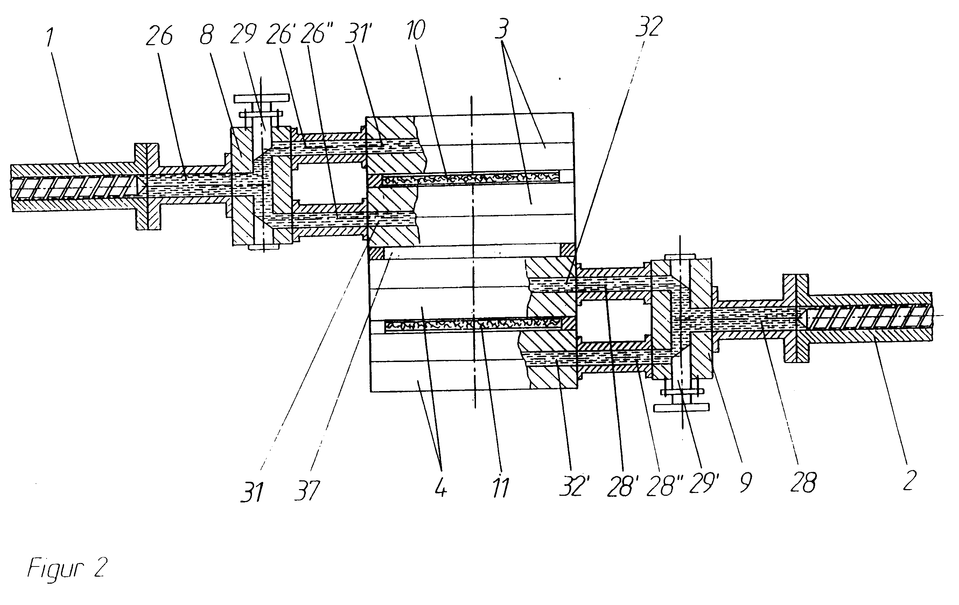

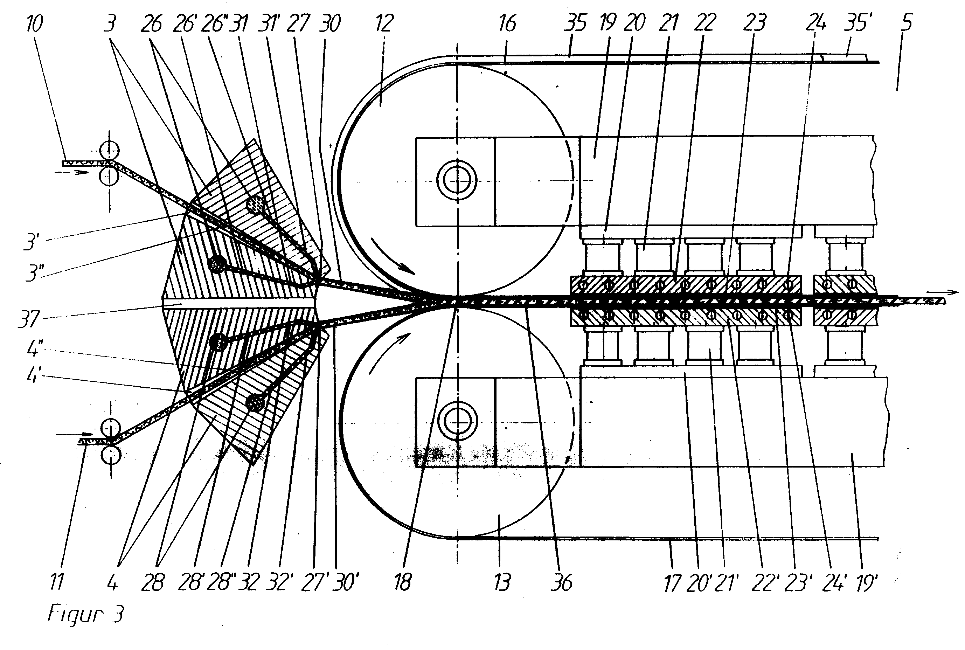

Das erfindungsgemäße Verfahren wird anhand der Fig. 1 - 3 erläutert.
Fig. 1 zeigt im wesentlichen die Extruder 1, 2, die Imprägnierdüsen 3, 4 und die Doppelbandpresse 5.
Fig. 2 zeigt den Ausschnitt aus Fig. 1 betreffend die Extrudereinheiten 1 und 2, die Regeleinheiten 8 und 9 mit den Schmelzeschiebern 29, 29', sowie die Imprägnierdüsen 3, 4.
Fig. 3 zeigt den Ausschnitt gemäß Fig. 1 betreffend die Imprägnierdüsen 3, 4 und die Einlaufwalzenrollen 12, 13 der Doppelbandpresse.

Das erfindungsgemäße Verfahren wird wie folgt durchgeführt. In die Extruder 1, 2 wird ein Thermoplast, beispielsweise Polypropylen, welcher gegebenenfalls mit Additiven wie Peroxiden versetzt ist, zugeführt. In den auf mindestens die Schmelztemperatur des Thermoplasten aufgeheizten Extrudern 1, 2 wird der Thermoplast aufgeschmolzen und in Form der Thermoplastschmelzen 26 und 28 den Regeleinheiten 8 und 9 zugeführt. In der Regeleinheit 8, 9 kann der Schmelzenstrom durch die Maßnahme eines Schmelzenschiebers 29, 29' reguliert werden; es werden die Schmelzeströme 26', 26'' und 28', 28'' gebildet, welche den Düsenschlitzen 31, 31' der Imprägnierdüse 3 und 32 und 32' der Imprägnierdüse 4 zugeführt werden. Die Imprägnierdüsen 3, 4 werden mindestens auf die Schmelztemperatur des Thermoplasten erhitzt.

Von den Vorratsrollen 33, 34 werden die Glasfasermatten 10, 11 den Imprägnierdüsen 3, 4 zugeführt. Diese Glasfasermatten können beispielsweise genadelte Wirrfasermatten mit einem Flächengehalt von 450 bis 1300 g/m² sein.

Die Zuführung dieser Glasfasermatten 10, 11 erfolgt derart, daß sie die vorgewärmten Düsenspalten 3',4' passieren. Die Düsenspalten 3', 4' sind derart ausgeführt, daß sie zum Düsenspaltausgang 27, 27' hin konisch verlaufend sind. Der Düsenspaltquerschnitt ist daher beim Düsenspalteingang 3'', 4'' breiter als am Düsenspaltausgang 27, 27'. Am Düsenspaltausgang 27, 27' werden die Thermoplastschmelzeströme 26', 26'' bzw. 28', 28'' auf die Ober- und Unterseite der Glasfasermatten 10, 11 aufgetragen, sodaß bereits am Düsenspaltausgang 27, 27' die Vorimprägnierung der Glasfasermatten erfolgt. Durch diese Maßnahme erfolgt eine gleichmäßige Durchtränkung der Glasfasermatten, wobei das Ausmaß der Durchtränkung durch die Maßnahme der Reguliereinheiten 8, 9 eingestellt wird. Dadurch können die Eigenschaften, beispielsweise die Oberflächeneigenschaften der glasfasermattenverstärkten Thermoplastplatte 25 wesentlich beeinflußt werden.

Die beidseitig vorimprägnierten Glasfasermatten werden anschließend in den Einlaufwalzenspalt 18 der Doppelbandpresse 5 geführt. Diese besteht aus dem beheizten Einlaufwalzenpaar 12, 13 und dem Auslaufwalzenpaar 14, 15, wobei um das Walzenpaar 12, 14 bzw. 13, 15 jeweils ein Endlosstahlband 16, 17 gespannt ist. Der Einlaufwalzenspalt 18 ist in seinem Querschnitt verstellbar, sodaß eine Vorkalibrierung der vorimprägnierten Glasfasermatte 30, 30' erfolgt. Durch den Anpreßdruck der Walzen 12, 13 wird ein Glasfasermatten-Thermoplastvorverbund 36 gebildet. Dieser wird den Kühlplatten 22, 22' zugeführt, durch welche die Wärme aus dem Vorverbund 36 abgeführt wird. Die in den Kühlplatten angebrachten, vom Kühlmedium, beispielsweise Wasser durchflossenen Bohrungen 24, 24' sind so angeordnet, daß die Flußrichtungen der gegenüberliegenden Platten 24 einerseits und 24' andererseits entgegengesetzt sind. Dadurch wird gewährleistet, daß die Eigenspannungen im Thermoplast, welche üblicherweise beim Extrudieren entstehen, abgebaut werden. Ferner dienen die Kühlplatten 22, 22' als Anpreßplatten und sind daher mit den Gleitfolien 23, 23' an der den Endlosstahlbändern 16, 17 zugekehrten Seite versehen; sie sind am Rahmen der Doppelbandpresse 5 mittels Druckzylindern 21, 21' befestigt und werden daher beidseitig am Vorverbund 36 angepreßt. Um innerhalb der Druckzone das Ausfließen der Thermoplastschmelze zu verhindern, werden zu beiden Seiten des Vorverbundes 36 die Führungsbänder 35, 35' welche in etwa die Dicke des Vorverbundes 36 aufweisen, seitlich in der Doppelbandpresse 5 endlos mitgeführt.

Durch die Maßnahme der Kühlplatten 22, 22' wird die Wärmeabfuhr aus dem Thermoplast bewirkt, sodaß das erfindungsgemäße Verfahren energiesparend geführt werden kann. Ferner kann der Anpreßdruck der Kühlplatten gering gehalten werden, beispielsweise bei 1 bar, um das ausreichende Verpressen zu den endgefertigten glasfaserverstärkten Thermoplastplatten 25 zu bewirken. Das ist darauf zurückzuführen, daß die ausreichende Vorimprägnierung bereits am Düsenspaltausgang 27, 27' der Imprägnierdüsen 3, 4 erfolgt, sodaß der Anpreßdruck nicht zum Imprägnieren, sondern für die Ausbildung des Thermoplastvorverbundes bzw. der endgefertigten Platte 25 dient. Die abgekühlten Thermoplastplatten 25 werden nach dem Passieren des Auslaufwalzenpaares 14, 15 einer Anordnung von Rundmessern 6 zugeführt, an welchen deren Seitenkanten geschnitten werden. Danach werden die Platten 25 in an sich bekannter Weise durch die Schlagscheren 7 abgelängt.

Die verfahrensgemäß hergestellten glasfaserverstärkten Thermoplastplatten können eine Dicke zwischen 1 und 5 mm aufweisen; deren Glasgehalt liegt zwischen 20 und 50%.

Bei der Herstellung von glasfaserverstärkten Thermoplastplatten mit hohem Glasgehalt, z.B. 50% und einer Dicke über 5 mm kann eine dritte Glasmatte im Spalt 37 zwischen den beiden Imprägnierdüsen 3 und 4 geführt werden, um den Anteil an Glasfasern zu erhöhen.

Bei einer Herstellung von glasfaserverstärkten Thermoplastplatten unter einer Dicke von 2,5 mm und einem Glasgehalt von unter 40% wird nur eine der Glasmatten 10 und 11 in das Verfahren eingesetzt.

### Gewerbliche Anwendbarkeit

Die durch das erfindungsgemäße Verfahren hergestellten glasfasermattenverstärkten Thermoplastplatten können zur Herstellung von Formteilen wie Kraftfahrzeugteilen durch Fließ- und/oder Formpreßverfahren verwendet werden. Dabei werden die glasmattenverstärkten Thermoplastplatten auf ihre Schmelztemperatur aufgeheizt, in eine Preßform eingelegt und unter Druck zu einem Formteil verpreßt.

## Patentansprüche

1. Verfahren zur Herstellung von glasfasermattenverstärkten Thermoplastplatten durch Imprägnieren von Glasfasermatten mit einer Thermoplastschmelze und anschließendem Verpressen des Thermoplast-Glasfasermattenverbundes, wobei mindestens eine der Glasfasermatten (10, 11) durch den Düsenspalt (3', 4') einer Imprägnierdüse (3, 4) geführt wird, welche von den Extrudern (1, 2) mit der Thermoplastschmelze (26, 28) gespeist werden, dadurch gekennzeichnet, daß die Imprägnierdüse 3, 4 mit der Thermoplastschmelze über die im Verteilerblock 8, 9 angebrachten Schmelzeschieber 29, 29' regelbar gespeist wird, sodaß jeweils zwei Schmelzeströme (26', 26'' und 28', 28'') gebildet werden, welche am Düsenspaltausgang (27, 27') auf die Ober- und Unterseite der Glasmatten (10, 11) aufgetragen werden, wobei die Vorimprägnierung der Glasfasermatte stattfindet und daß anschließend diese mit Thermoplast vorimprägnierten Glasfasermatten (30, 30') in den Einlaufwalzenspalt (18) der Doppelbandpresse (5) geführt und vorkalibriert werden und anschließend unter Druck mittels der Kühlplatten (22, 22') zu den glasfasermattenverstärkten Thermoplastplatten (25) verpreßt werden.

2. Verfahren nach Anspruch 1, dadurch gekennzeichnet, daß die Glasfasermatten (10, 11) im Düsenspalt (3', 4') vorgewärmt werden.

3. Verfahren nach Anspruch 1 oder 2, dadurch gekennzeichnet, daß als Thermoplastschmelze (26, 28) eine niedrigviskose Polypropylen-Schmelze, welche gegebenenfalls Additive wie Peroxide enthält, eingesetzt wird.

4. Verfahren nach einem der Ansprüche 1 bis 3, dadurch gekennzeichnet, daß die Glasfasermatte aus geschnittenen, wirr verlegten und/oder unidirektionalen und/oder direktionalen ungeschnittenen Glasfasern mit einem Flächengehalt von 450 bis 1300 g/m² besteht.

5. Verfahren nach einem der Ansprüche 1 bis 4, dadurch gekennzeichnet, daß die vorimprägnierten Glasfasermatten 30, 30' im in seinem Querschnitt verstellbaren Einlaufwalzenspalt 18 vorkalibriert werden.

6. Verfahren nach einem der Ansprüche 1 bis 5, dadurch gekennzeichnet, daß der Thermoplast-Glasfasermattenverbund in der Druckzone mit max. 2 bar verpreßt wird.

7. Verwendung der nach den Ansprüche 1 bis 6 hergestellten glasfasermattenverstärkten Thermoplastplatten für die Herstellung von Formteilen wie Kraftfahrzeugteilen, dadurch gekennzeichnet, daß die glasmattenverstärkten Thermoplastplatten auf ihre Schmelztemperatur aufgeheizt, in eine Preßform eingelegt und unter Druck zum Formteil verpreßt werden.

8. Vorrichtung zur Herstellung von glasmattenverstärkten Thermoplastplatten gemäß einem der Ansprüche 1 - 6, bestehend aus den Extrudern (1, 2) für die Herstellung der Thermoplastschmelze, welche mit den Imprägnierdüsen (3, 4) versehen sind und einer Doppelbandpresse, welche zum Verpressen des Thermoplast-Glasfasermattenverbundes dient, dadurch gekennzeichnet, daß die Extruder (1, 2) mit den Imprägnierdüsen über die Verteilerblöcke (8, 9) in Verbindung stehen, daß in den Verteilerblöcken (8, 9) für die Regelung der Thermoplastschmelzeströme (26, 26'', 28', 28'') Schmelzeschieber (28, 29) angeordnet sind und daß die Doppelbandpresse zum Verpressen der glasmattenverstärkten Thermoplastplatten (25) die in der Kühlzone angeordneten Kühlplatten (22, 22') aufweist.

9. Vorrichtung nach Anspruch 8, dadurch gekennzeichnet, daß die Imprägnierdüsen (3, 4) jeweils zwei Düsenschlitze (31, 31' und 32, 32') aufweisen, wobei zwischen jeweils zwei Düsenschlitzen die Düsenspalte (3', 4') für die Zuführung der Glasfasermatten angeordnet sind.

10. Vorrichtung nach Anspruch 9, dadurch gekennzeichnet, daß die Düsenspalten (3',4') derart ausgeführt sind, daß sie zum Düsenspaltausgang (27, 27') hin konisch verlaufend sind, wobei der Düsenspaltquerschnitt beim Düsenspalteingang (3'', 4'') breiter ist als am Düsenspaltausgang (27, 27').

11. Vorrichtung nach einem der Ansprüche 8 - 10, dadurch gekennzeichnet, daß die Kühlplatten (22, 22') gleichzeitig als Preßplatten dienen, wobei sie einseitig an der Kontaktfläche zu den Stahlbändern (16, 17) mit den Gleitfolien (23, 23') versehen sind.

12. Vorrichtung nach einem der Ansprüche 8 - 10, dadurch gekennzeichnet, daß in der Doppelbandpresse (5) Führungsbänder (35, 35') seitlich endlos mitgeführt werden, welche in ihrer Dicke dem Vorverbund (36) entsprechen.

13. Vorrichtung nach einem der Ansprüche 8 bis 12, dadurch gekennzeichnet, daß der Querschnitt des Einlaufwalzenspaltes (18), welcher durch die beheizten Einlaufwalzen (12, 13) gebildet wird, einstellbar ist.

## Claims

1. A method of producing glass fibre mat reinforced thermoplastic boards by impregnating glass fibre mats with molten thermoplastic material and subsequently pressing the thermoplastic glass fibre mat composite, wherein at least one of the glass fibre mats (10,11) is directed through the nozzle orifice (3',4') of an impregnation nozzle (3,4), to which the molten thermoplastic material (26,28) is fed by extruders (1,2), characterised in that the molten thermoplastic material is fed adjustably to the impregnation nozzle (3,4) via slide valves (29,29') for the molten material mounted in a distributor block (8,9), so as to form two respective melt flows (26',26" and 28',28") which at the nozzle orifice outlet (27,27') are applied to the upper side and underside of the glass mats (10, 11), wherein preimpregnation of the glass fibre mat takes place and in that subsequently these glass fibre mats (30,30') preimpregnated with thermoplastic material are directed into and precalibrated in the roller inlet gap (18) of a double belt press (5), and are subsequently pressed under pressure by means of cooling plates (22,22') to form glass fibre mat reinforced thermoplastic boards (25).

2. A method according to Claim 1, characterised in that the glass fibre mats (10,11) are preheated in the nozzle orifice (3',4').

3. A method according to Claim 1 or 2, characterised in that a low viscosity polypropylene melt is used as the molten thermoplastic material (26,28), which optionally contains additives such as peroxides.

4. A method according to any one of Claims 1 to 3, characterised in that the glass fibre mat consists of cut, randomly disposed and/or unidirectional and/or directional uncut glass fibres with a surface content of 450 to 1300 g/m².

5. A method according to any one of Claims 1 to 4, characterised in that the preimpregnated glass fibre mats (30,30') are precalibrated in the roller inlet gap (18) which can be adjusted in its cross-section.

6. A method according to any one of Claims 1 to 5, characterised in that in the pressing zone the thermoplastic glass fibre mat composite is pressed at a maximum of 2 bar.

7. Use of the glass fibre mat reinforced thermoplastic boards produced according to Claims 1 to 6 for the production of mouldings, such as motor vehicle parts, characterised in that the glass mat reinforced thermoplastic boards are heated to their melting temperature, are introduced into a press mould and pressed under pressure to form a moulding.

8. An apparatus for producing glass mat reinforced thermoplastic boards according to any one of Claims 1 to 6, comprising the extruders (1,2) for producing the thermoplastic melt, which are provided with the impregnation nozzles (3,4) and a double belt press which serves for pressing the thermoplastic glass fibre mat composite, characterised in that the extruders (1,2) are connected with the impregnation nozzles via the distributor blocks (8,9), in that slide valves (29,29') for the molten material are provided in the distributor blocks (8,9) for adjusting the thermoplastic melt flows (26',26'',28',28''), and in that the double belt press has the cooling plates (22,22') arranged in the cooling zone for pressing the glass mat reinforced thermoplastic boards (25).

9. An apparatus according to Claim 8, characterised in that the impregnation nozzles (3,4) each have two nozzle slots (31,31' and 32,32'), wherein the nozzle orifices (3',4') for feeding the glass fibre mats are disposed between two respective nozzle slots.

10. An apparatus according to Claim 9, characterised in that the nozzle orifices (3',4') are designed so that they taper towards the nozzle orifice outlet (27,27'), the nozzle orifice cross-section at the nozzle orifice inlet (3'',4'') being wider than at the nozzle orifice outlet (27,27').

11. An apparatus according to any one of Claims 8 to 10, characterised in that the cooling plates (22,22') serve simultaneously as pressing plates, wherein they are provided with slide films (23,23') on one side on the contact surface with the steel belts (16,17).

12. An apparatus according to any one of Claims 8 to 10, characterised in that in the double belt press (5) guide belts (35,35') are guided laterally and endlessly, and correspond in their thickness to the precomposite (36).

13. An apparatus according to any one of Claims 8 to 12, characterised in that the cross-section of the roller inlet gap (18), which is formed by the heated inlet rollers (12,13), is adjustable.

## Revendications

1. Procédé de fabrication de plaques thermoplastiques renforcée par des mats de fibres de verre, par imprégnation de mats de fibres de verte avec un produit thermoplastique fondu, puis pressage du composite mat de fibres de verre-thermoplastique, où au moins l'un des mats de fibres de verte (10, 11) est guidé à travers l'intervalle de la filière (3', 4') d'une filière d'imprégnation (3, 4), qui est alimentée par les extrudeuses (1, 2) en produit thermoplastique fondu (26, 28), caractérisé en ce que la filière d'imprégnation (3, 4) est alimentée en produit thermoplastique fondu, de façon réglable, par l'intermédiaire des registres à produit fondu (29, 29') montés dans le bloc de distributeur (8, 9), si bien que, sont constitués respectivement deux flux de produit fondu (26', 26'' et 28', 28''), qui sont appliqués à la sortie de l'intervalle de la filière (27, 27'), sur la face supérieure et la face inférieure des mats de verre (10, 11), la préimprégnation du mat de fibres de verte ayant lieu et en ce que, ensuite, ces mats réimprégnés de thermoplastique (30, 30') sont guidés, dans l'emprise de rouleau d'entrée (18) de la presse à double bandes (5) et sont précalibrés puis pressés sous une pression au moyen des plaques de refroidissement (22, 22'), pour donner les plaques thermoplastiques (25) renforcées par mats de fibres de verre.

2. Procédé selon la revendication 1, caractérisé en ce que les mats de fibres de verre (10, 11) sont préchauffés dans l'intervalle de la filière (3', 4').

3. Procédé selon la revendication 1 ou 2, caractérisé en ce qu'on utilise comme produit thermoplastique fondu (26, 28) un produit fondu à base de polypropylène faiblement visqueux qui contient, le cas échéant, des additifs tels que des peroxydes.

4. Procédé selon l'une des revendications 1 à 3, caractérisé en ce que le mat en fibre de verre est constitué de fibres de verre coupées, posées de façon désordonnée et/ou de fibres de verre non coupées, unidirectionnelles et/ou directionnelles, ayant un poids surfacique de 450 à 1300 g/m².

5. Procédé selon l'une des revendications 1 à 4, caractérisé en ce que les mats de fibres de verre (30, 30') préimprégnés sont précalibrés dans l'emprise de rouleau d'entrée (18) à section transversale réglable.

6. Procédé selon l'une des revendications 1 à 5, caractérisé en ce que le composite mat de fibres de verre-thermoplastique est pressé dans la zone de pressage, à une valeur maximale de deux bars.

7. Utilisation des plaques thermoplastiques renforcées par des mats de fibres de verte fabriquées selon les revendications 1 à 6, pour la fabrication de pièces moulées, telles que des pièces de véhicule automobile, caractérisé en ce que les plaques thermoplastiques renforcées par des mats de fibres de verte sont chauffées à leur température de fusion, insérées dans un moule de pressage et pressées sous pression pour donner une pièce moulée.

8. Dispositif de fabrication de plaques thermoplastiques renforcée par des mats de verte selon l'une des revendications 1 à 6, composé des extrudeuses (1, 2) pour la fabrication du produit thermoplastique fondu, qui sont dotées des filières d'imprégnation (3, 4) et d'une presse à double bande qui sert au pressage du composite mats de libres de verte-thermoplastique, caractérisé en ce que les extrudeuses (1, 2) sont reliées aux filières d'imprégnation par l'interrnédiaire des blocs distributeurs (8, 9), en ce que dans les blocs distributeurs (8, 9) destinés à la régulation des flux de thermoplastique fondu (26, 26'', 28', 28'') sont disposés des registres à produits fondu (28, 29), et en ce que la pressé double bande présente pour le pressage des plaques thermoplastique (25) renforcées par des mats de verre, des plaques de refroidissement (22, 22') disposées dans la zone de refroidissement.

9. Dispositif selon la revendication 8, caractérisé en ce que les filières d'imprégnation (3, 4) présentent chacune deux fentes de filières (31, 31' et 32, 32'), entre chaque fois deux fentes de filière étant disposés les intervalles de filière (3', 4') destinés à l'amenée des mats de fibres de verre.

10. Dispositif selon la revendication 9, caractérisé en ce que les intervalles de filières (3', 4') sont réalisés de manière qu'ils ont une allure conique en allant vers la sortie d'intervalle de filière (27, 27'), la section transversale de l'intervalle de filière étant à l'entrée d'intervalle de filière (3'', 4'') plus large qu'à la sortie d'intervalle de filière (27, 27').

11. Dispositif selon l'une des revendications 8-10, caractérisé en ce que les plaques de refroidissement (22, 22') servent simultanément de plaques de pressage, en étant dotées sur une face, sur la surface de contact avec les bandes en acier (16, 17), des feuilles de glissement (23, 23').

12. Dispositif selon l'une des revendications 8-10, caractérisé en ce que, dans la presse à double bande (5), sont entraînées latéralement sans lin des bandes de guidage (35, 35') qui correspondent en épaisseur à celle du précomposite (36).

13. Dispositif selon l'une des revendications 8 à 12, caractérisé en ce que la section transversale de l'emprise de rouleau d'entrée (18) formé par les rouleaux d'entrée (12, 13) chauffés, est réglable.
